Europäisches Patentamt

European Patent Office

Office européen des brevets

(19)

(11) Numéro de publication : **0 510 061 B1**

## (12) FASCICULE DE BREVET EUROPEEN

(45) Date de publication du fascicule du brevet :
**20.04.94 Bulletin 94/16**

(51) Int. Cl.$^5$ : **G01R 27/06**

(21) Numéro de dépôt : **91902297.0**

(22) Date de dépôt : **28.12.90**

(86) Numéro de dépôt international :
**PCT/FR90/00961**

(87) Numéro de publication internationale :
**WO 91/09812 11.07.91 Gazette 91/14**

(54) **DISPOSITIF DE MESURE DES VARIATIONS DE LA CAPACITE D'UN CONDENSATEUR FORMANT, NOTAMMENT, UN CAPTEUR.**

(30) Priorité : **29.12.89 FR 8917551**

(43) Date de publication de la demande :
**28.10.92 Bulletin 92/44**

(45) Mention de la délivrance du brevet :
**20.04.94 Bulletin 94/16**

(84) Etats contractants désignés :
**BE CH DE ES GB IT LI NL SE**

(56) Documents cités :
**DE-B- 2 659 807
US-A- 4 241 303
US-A- 4 673 869
US-A- 4 684 886**

(56) Documents cités :
**IEEE Transactions on Instrumentation and Measurement, Vol. 21, No. 1, Fevrier 1972, New York US, J.E. Sigdell: "A principle for capacitance measurement, suitable for linear evaluation of capacitance transducers", pages 60-61
PATENT ABSTRACTS OF JAPAN, Vol. 12, No. 7 (E-571), 9 janvier 1988, & JP-A-6 216 84 08**

(73) Titulaire : **SOCIETE D'APPLICATIONS GENERALES D'ELECTRICITE ET DE MECANIQUE SAGEM
6, Avenue d'Iéna
F-75783 Paris Cédex 16 (FR)**

(72) Inventeur : **PERMUY, Alfred
11, rue des Recollets
F-75010 Paris (FR)**

(74) Mandataire : **Fort, Jacques et al
CABINET PLASSERAUD 84, rue d'Amsterdam
F-75009 Paris (FR)**

EP 0 510 061 B1

**Description**

## DISPOSITIF DE MESURE DES VARIATIONS DE LA CAPACITE D'UN CONDENSATEUR FORMANT, NOTAMMENT, UN CAPTEUR

La présente invention concerne le domaine technique des dispositifs de mesure au sens général, adaptés pour déterminer les variations de capacité d'un condensateur à caractère variable.

L'art antérieur a déjà proposé de nombreux dispositifs de mesure qui, par la détection des variations de capacité, permettent la délivrance d'un signal électrique représentant la grandeur mesurée. Un tel signal est destiné à être appliqué à des chaînes électroniques de traitement afin d'assurer, par exemple, des contrôles, mesures, régulation ou asservissement automatiques.

De tels dispositifs de mesure sont constitués classiquement par un circuit électrique appelé conditionneur, associé directement au capteur capacitif pour délivrer le signal électrique traduisant les variations de capacités du capteur, liées aux évolutions de la grandeur physique à mesurer. Ces dispositifs de mesure de la capacité d'un capteur comportent généralement aussi un circuit de linéarisation associé au conditionneur, pour permettre de corriger le défaut de linéarité du capteur ou éventuellement, également, du conditionneur utilisé, lorsque ce ou ces derniers présentent, dans leur domaine d'emploi, des écarts à la linéarité interdisant de considérer la sensibilité comme constante, en relation de la précision exigée des mesures. Le défaut de linéarité intervient, par exemple, lors de la mise en oeuvre d'un capteur capacitif constitué sous la forme d'une poutre en porte-à-faux comportant un élément sensible formant une armature mobile placée en relation de distance d'une armature fixe présentée par un support de fixation de l'élément sensible.

Il doit tout d'abord être constaté que les conditionneurs actuellement utilisés mettent en oeuvre des composants interdisant leur intégration sur un circuit et se trouvent destinés à fonctionner dans une gamme de température très réduite.

Par ailleurs, un premier type de circuits de linéarisation fait appel à des techniques numériques de linéarisation nécessitant la mise en oeuvre d'un convertisseur analogique-numérique, une mémoire affectant une valeur mémorisée à chaque valeur du signal électrique utilisé comme adresse de la mémoire, et un convertisseur numérique-analogique. De mise en oeuvre simple et rapide, ces circuits de linéarisation sont peu économiques car la précision est directement liée à la capacité de la mémoire.

Un second type de circuits de linéarisation fait appel à des techniques analogiques mettant en oeuvre des diodes. L'utilisation de tels circuits est en pratique limitée à la linéarisation d'un signal électrique dont la courbe de variation présente une inflexion de sens prédéterminée et unique.

Dans l'article de J.E. Sigdell "A Principle for Capacitance Measurement, Suitable for Linear Evaluation of Capacitance Transducers", IEEE Transations on Instrumentation and Measurement, Vol. 21, N°1, février 1972, est représenté le schéma électrique d'un dispositif de mesure de capacité comportant un oscillateur générant un signal alternatif appliqué à une diagonale d'un pont capacitif de détection incluant la capacité variable mesurée, et un amplificateur dont les entrées sont connectées à l'autre diagonale du pont capacitif (figure 12). La sortie de l'amplificateur est reliée à son entrée négative par une résistance de contre-réaction pour que l'amplificateur fonctionne en mode différentiel.

La présente invention vise donc à remédier aux inconvénients énoncés ci-dessus, en proposant un dispositif de mesure des variations de la capacité d'un condensateur, présentant une bonne insensibilité aux capacités parasites et aux perturbations électriques et autorisant sa miniaturisation sur un circuit intégré.

L'objet de l'invention vise aussi à offrir un dispositif de mesure adapté pour corriger le défaut de linéarité d'un signal électrique dont la loi de variation présente des inflexions de sens variées.

L'objet de l'invention vise, également, à proposer un dispositif de mesure qui, adapté pour corriger le défaut de linéarité intervenant entre le signal électrique délivré et les variations de la capacité du capteur, présente un coût relativement réduit.

L'invention propose ainsi un dispositif de mesure tel que défini dans la revendication 1.

Un mode de réalisation avantageux de l'invention, adapté pour linéariser le signal de déséquilibre du pont de détection, est défini dans la revendication 4.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est un schéma électrique montrant un exemple de réalisation du dispositif de mesure selon l'invention.

La **fig. 2** est une courbe montrant l'allure du signal électrique délivré en un point caractéristique du dispositif de mesure selon l'invention.

La **fig. 3** est un schéma électrique montrant un détail caractéristique du dispositif de linéarisation selon l'invention.

Les **fig. 4A à 4E** sont des courbes illustrant le principe de fonctionnement du circuit de linéarisation selon l'invention.

La **fig. 5** illustre un schéma électrique d'un détail caractéristique de l'invention.

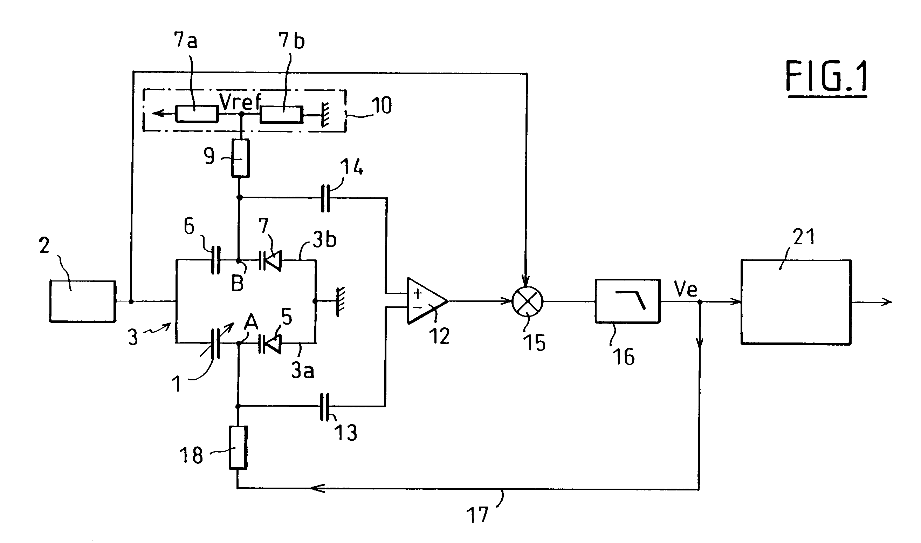

La **fig. 1** illustre un exemple de réalisation d'un dispositif de mesure adapté pour déterminer les variations de capacité d'un condensateur **1** à caractère variable. Avantageusement, le condensateur **1** constitue un capteur capacitif de grandeurs mécaniques, telles que force, pression ou accélération. Selon un exemple préféré de réalisation, le capteur capacitif se présente sous la forme d'une poutre en porte-à-faux, réalisée en un substrat semi-conducteur monolithique et comportant au moins un élément flexible d'épaisseur déterminée, rattaché à un pied d'ancrage sur le substrat. L'élément flexible détermine une armature mobile du condensateur variable dont l'armature fixe est constituée par une zone conductrice formée dans le substrat.

Le dispositif de mesure selon l'invention vise à détecter les variations de capacité du condensateur **1**, permettant la délivrance d'un signal électrique représentatif de la grandeur mesurée. A cet effet, le dispositif de mesure comporte un oscillateur **2** générant un signal alternatif par exemple du type carré, de fréquence de l'ordre du Megahertz et d'amplitude de l'ordre de quelques volts. Le dispositif de mesure comporte un pont de détection **3** formé par une première **3a** et une seconde **3b** branches reliées à l'oscillateur **2** et à la masse.

La première branche **3a** est composée par le condensateur **1** monté en série avec une diode **5** à capacité variable. La diode **5** est polarisée de manière à se comporter comme un condensateur dont la capacité est apte à être commandée par une tension. A cet effet, l'anode de la diode **5** est reliée, en un point commun **A**, à une armature du condensateur **1**.

La seconde branche **3b** est formée par un condensateur **6** monté en série avec une diode **7** à capacité variable identique à la diode **5**. Le point commun **B**, entre le condensateur **6** et l'anode de la diode **7**, est relié, par l'intermédiaire d'une résistance **9** de polarisation en continu, à un circuit **10** de polarisation en continu du point **B** et, par suite, de la diode **7**, permettant de fixer le point d'équilibre du pont de détection. Le circuit de polarisation **10** est apte à délivrer une tension de référence **Vref**, de préférence ajustable, et formé par exemple par un pont diviseur composé de résistances **7a**, **7b**.

Il est à noter que la tension variable est choisie de manière que l'amplitude du signal, variable aux points **A**, **B**, soit faible par rapport à celle de la tension de référence. De plus, le condensateur **6** peut constituer aussi un capteur à capacité variable, permettant la détection différentielle de capacités.

Les points communs **A** et **B** des première et seconde branches **3a**, **3b**, sont reliés à l'entrée d'un étage différentiel **12**, par l'intermédiaire, respectivement, d'un condensateur de liaison **13**, **14** adapté pour couper la composante continue du signal provenant du pont de détection. Avantageusement, l'étage différentiel **12** est constitué par un amplificateur dont l'entrée non inverseuse est reliée au point commun **B**, tandis que l'entrée inverseuse est reliée au point **A**.

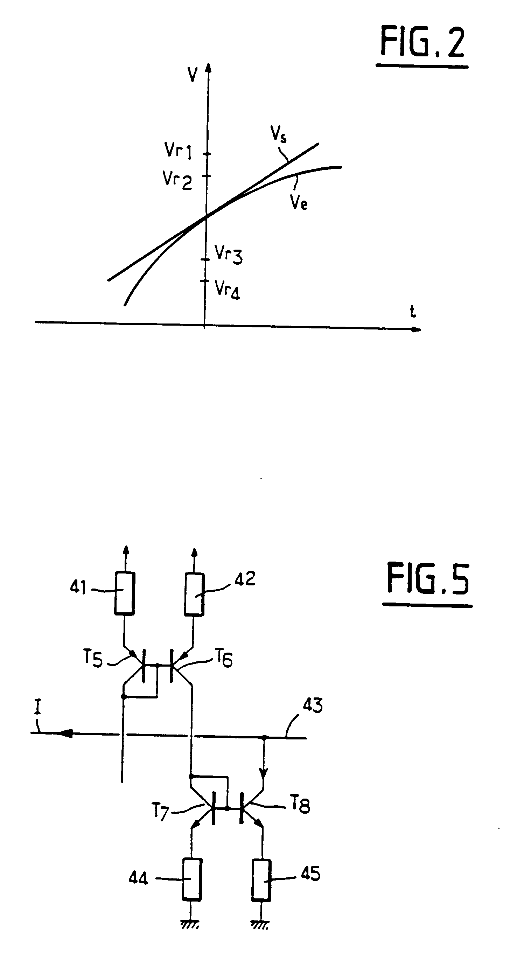

L'amplificateur **12** est relié à un circuit **15** de détection synchrone du signal, recevant l'information de synchronisation à partir de l'oscillateur **2**. Le circuit de détection synchrone **15**, réalisé de manière connue, est connecté à un filtre passe-bas **16** de fréquence de coupure adaptée, de l'ordre de, par exemple, 50 Hertz. La sortie du filtre **16** est reliée au point commun **A** de la première branche, par une ligne de contre-réaction **17** dans laquelle est montée une résistance **18** de polarisation en continu de la diode **5**. La contre-réaction du pont de détection **3**, au niveau de la branche qui comporte la capacité variable, permet d'assurer un rééquilibrage continu du pont de détection. Ainsi, le signal **Ve** délivré par le filtre **16**, tel qu'illustré à la **fig. 2**, correspond au signal de déséquilibre du pont qui permet ainsi de mesurer en continu la variation de la capacité du condensateur variable **1**.

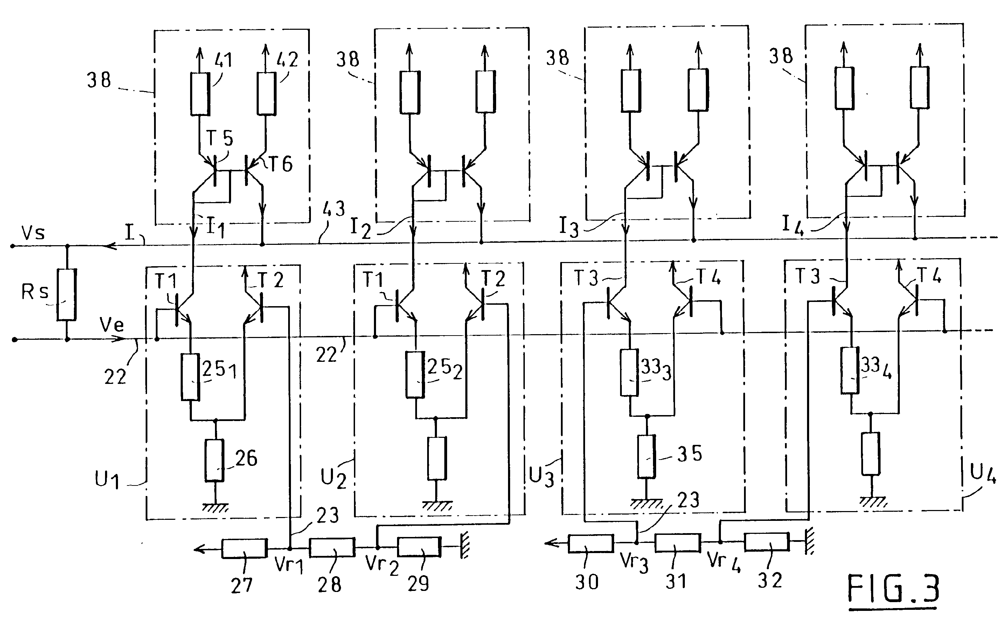

Avantageusement, le filtre **16** est suivi par un circuit **21** de linéarisation du signal **Ve** de déséquilibre du pont, adapté pour corriger le défaut de linéarité du capteur **1** et des diodes **5** et **7**. Le circuit de linéarisation **21**, selon l'invention, comporte au moins une, et dans l'exemple illustré à la **fig. 3**, quatre unités $U_1$-$U_4$ différentielles à seuil, comportant chacune une première entrée **22** recevant le signal de déséquilibre **Ve** et une seconde entrée **23** présentant une tension de référence respectivement $Vr_1$ à $Vr_4$. Chaque unité $U_1$-$U_4$ délivre, respectivement, un courant de sortie $I_1$-$I_4$ dont la loi de variation comporte une partie à pente nulle, raccordée à une partie à pente déterminée, par l'intermédiaire d'un point anguleux défini pour la tension de référence correspondante.

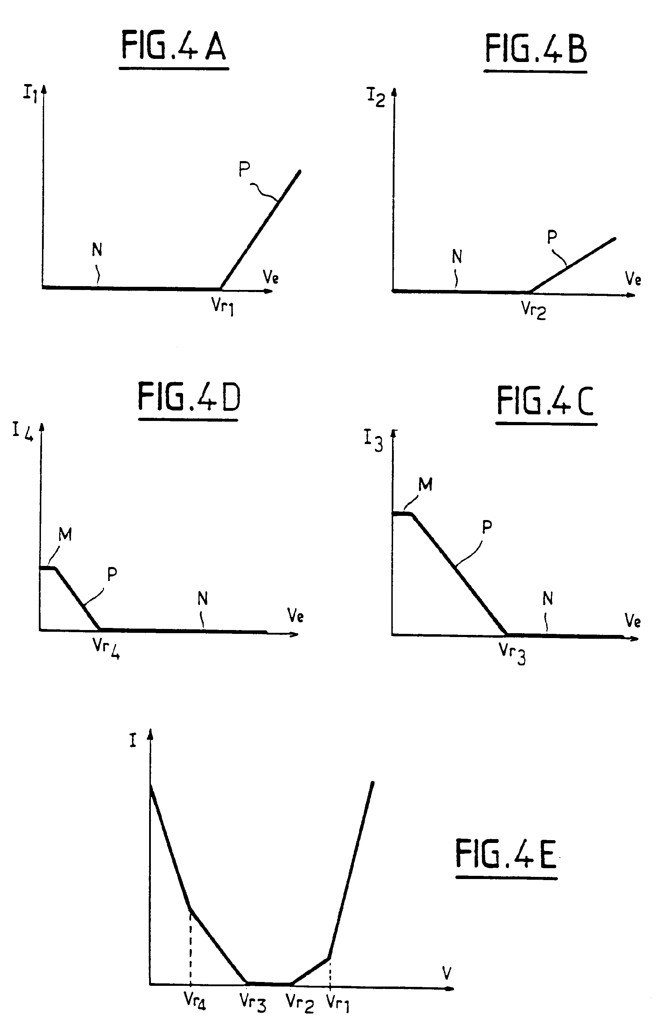

Tel que cela apparaît plus précisément aux **fig. 4A** et **4B**, au moins une, et par exemple deux unités différentielles $U_1$, $U_2$, délivrent chacune un courant de sortie $I_1$, $I_2$ dont la loi de variation comprend une partie **N** à pente nulle pour une valeur du signal de déséquilibre **Ve**, inférieure à celle de la tension de référence $Vr_1$, $Vr_2$ correspondante, et une partie **P** à pente déterminée, pour une valeur du signal **Ve** supérieure à celle de la tension $Vr_1$, $Vr_2$ qui correspond au point anguleux de la courbe.

Avantageusement, le circuit de linéarisation peut comporter, également, au moins une et, dans l'exemple illustré, deux unités différentielles $U_3$, $U_4$ délivrant, conformément aux **fig. 4C-4D**, un signal de sortie $I_3$, $I_4$ dont la loi de variation comprend une partie à pente nulle **N** pour une valeur du signal de déséquilibre supérieure à celle de la tension de référence $Vr_3$, $Vr_4$, et une partie à pente déterminée **P**, pour une valeur du signal de déséquilibre inférieure à celle de la tension de référence correspondante. Il est à noter que la partie plane **M** de la courbe, prolongeant la partie à pente **P**, n'est pas utilisée pour l'objet de l'invention.

La **fig. 3** illustre un exemple de réalisation des unités différentielles à seuil $U_1$-$U_4$ aptes à délivrer un signal de sortie affectant les caractéristiques énoncées ci-dessus. Chaque unité différentielle $U_1$, $U_2$

comporte un transistor $T_1$, du type **NPN**, dont la base reçoit le signal de déséquilibre **Ve**. L'émetteur du transistor $T_1$ des unités différentielles $U_1$, $U_2$ est connecté, par l'intermédiaire d'une résistance $25_1$, $25_2$, à l'émetteur d'un transistor $T_2$ du type **NPN**. L'émetteur du transistor $T_2$ est connecté, par l'intermédiaire d'une résistance **26**, à la masse, tandis que le collecteur de ce transistor $T_2$ est reliée à une tension de polarisation. La base du transistor $T_2$ de chaque unité $U_1$, $U_2$ reçoit le signal de référence $Vr_1$, $Vr_2$ correspondant qui est délivré, par exemple, par un pont diviseur de tension formé par des résistances **27, 28, 29**.

Le fonctionnement de chaque unité différentielle découle directement de la description établie ci-dessus. Si le signal **Ve** présente une valeur de tension inférieure à une tension de référence $Vr_1$, $Vr_2$, le transistor $T_1$ correspondant est bloqué, de sorte que le courant $I_1$, $I_2$, sortant du collecteur du transistor, est nul. Si la tension **Ve** présente une valeur supérieure à une tension de référence $Vr_1$, $Vr_2$, le collecteur du transistor $T_1$ débite un courant tel que :

$$I_1 = (Ve - Vr_1) / R25_1$$

et :

$$I_2 = (Ve - Vr_2) / R25_2$$

Il est à noter que la pente de la courbe de variation du courant $I_1$, $I_2$ (**fig. 4A, 4B**) est déterminée par la valeur $R25_1$- $R25_2$ de la résistance correspondante $25_1$, $25_2$. De plus, le point anguleux de cette courbe est directement défini pour la tension de référence $Vr_1$, $Vr_2$.

Tel que cela apparaît plus précisément à la **fig. 3**, chaque unité différentielle $U_3$, $U_4$ comporte un transistor $T_3$ dont la base reçoit le signal de référence $Vr_3$, $Vr_4$ correspondant qui est délivré, par exemple, par un pont diviseur **30, 31, 32**. L'émetteur du transistor $T_3$ des unités différentielles $U_3$, $U_4$ est relié à l'émetteur d'un transistor $T_4$, par l'intermédiaire d'une résistance $33_3$, $33_4$. L'émetteur du transistor $T_4$ est relié à une résistance **35** connectée à la masse, tandis que le collecteur du transistor $T_4$ est relié à une tension de polarisation. La base du transistor $T_4$ reçoit le signal de déséquilibre **Ve**.

Si le signal **Ve** présente une valeur de tension supérieure à la tension de référence $Vr_3$, $Vr_4$, le transistor $T_3$ est bloqué, de sorte que le courant $I_3$, $I_4$, sortant du collecteur du transistor $T_3$, est nul (**fig. 4C, 4D**). Si la tension **Ve** présente une valeur inférieure à celle de la tension de référence $Vr_3$, $Vr_4$, le transistor $T_3$ est conducteur et débite un courant :

$$I_3 = (Vr_3 - Ve) / R33_3$$

et :

$$I_4 = (Vr_4 - Ve) / R33_4$$

La pente de la loi de variation des courants $I_3$, $I_4$ peut donc être adaptée en fonction du choix de la valeur $R33_3$, $R33_4$ des résistances $33_3$, $33_4$. De même, le point anguleux de cette loi se trouve directement déterminé par les tensions de référence $Vr_3$, $Vr_4$.

Tel que cela apparaît plus précisément à la **fig. 3**,

chaque unité différentielle $U_1$- $U_4$ est associée à un moyen **38** de combinaison des courants $I_1$- $I_4$ issus des unités différentielles, de manière à obtenir un courant résultant I, image de tous les courants délivrés par les unités différentielles. Dans l'exemple illustré, les moyens de combinaison **38** sont constitués chacun par un miroir de courant et se trouvent associés ensemble pour additionner les courants $I_1$ à $I_4$ et obtenir un courant résultant I dont la loi de variation est illustrée à la **fig. 4E**.

A titre d'exemple, chaque miroir de courant **38** comporte un transistor $T_5$ de type **PNP** dont le collecteur est relié à sa base et au collecteur du transistor $T_1$. L'émetteur du transistor $T_5$ est pourvu d'une résistance **41** de polarisation, tandis que la base du transistor $T_5$ est reliée à la base d'un transistor $T_6$ dont l'émetteur est connecté à une résistance de polarisation **42**. Le collecteur du transistor $T_6$ est relié à une ligne collectrice **43** connectée aux collecteurs des transistors $T_6$ des autres miroirs de courant **38**. Il est à noter que le choix des résistances **41, 42** permet de régler la pente de la loi de variation des courants $I_1$- $I_4$.

Le courant résultant I peut alors traverser une résistance **Rs** de manière à obtenir, en combinaison avec le signal **Ve**, un signal de sortie linéarisé **Vs**, tel que :

$$Vs = Ve + Rs.I$$

Le circuit de linéarisation selon l'invention permet ainsi d'assurer une linéarisation d'un signal électrique dont la loi de variation présente des inflexions de sens contraire, tel que cela apparaît clairement à la **fig. 2**.

Bien entendu, le circuit de linéarisation selon l'invention peut comporter, d'une manière générale, **n** unités différentielles à seuil **U**, associées chacune à un moyen de combinaison **38**. Le nombre d'unités différentielles est choisi en fonction de la précision de linéarisation à obtenir. De plus, le type d'unités différentielles, utilisées individuellement ou en combinaison, est déterminé en fonction du signal à linéariser. La linéarisation, effectuée par le circuit, peut être réglée en choisissant des valeurs adaptées pour les résistances $25_1$, $25_2$, $33_3$, $33_4$, **41** et **42**, ainsi que pour les tensions de référence **Vr**. Le circuit de linéarisation selon l'invention présente, manifestement, un coût limité, tout en présentant une possibilité de réglage analogique du signal.

De plus, il est à noter que le dispositif de mesure dans son ensemble, à savoir le pont de détection et le circuit de linéarisation, est formé à partir de composants pouvant être réalisés sur un circuit intégré.

Il doit être considéré, par ailleurs, que le signe de la pente du courant résultant I peut être modifiée si les moyens de combinaison **38** assurent, non pas une addition, mais une soustraction des courants délivrés par les unités différentielles à seuil. A cet effet, tel que cela apparaît plus clairement à la **fig. 5**, le collecteur du transistor $T_6$ est relié au collecteur d'un transistor

$T_7$ dont l'émetteur est relié à la masse par l'intermédiaire d'une résistance **44**. La base du transistor $T_7$, qui est relié à son collecteur, est connectée à la base d'un transistor $T_8$ dont l'émetteur est relié à la masse grâce à une résistance **45**. Le collecteur du transistor $T_8$ est relié à la ligne collectrice **43** à partir de laquelle les courants $I_1$-$I_4$ sont soustraits. Il est à noter que la pente de la loi de variation des courants peut être adaptée en fonction des résistances **44, 45**.

L'invention trouve une application particulièrement avantageuse pour la mesure des variations de capacité d'un condensateur formant un capteur de grandeurs mécaniques, telles que force, accélération ou pression.

## Revendications

1. Dispositif de mesure des variations de la capacité d'un condensateur variable constitutif, notamment, d'un capteur, comportant : un oscillateur (2) générant un signal alternatif, un pont de détection (3) comportant une première (3a) et une seconde (3b) branches reliées à l'oscillateur, la première branche comportant un condensateur variable (1) monté en série avec un autre élément capacitif (5), tandis que la seconde branche comporte un condensateur (6) monté en série avec un autre élément capacitif (7), et un étage différentiel (12) dont chaque entrée est reliée au point commun d'une branche, situé entre un condensateur et ledit élément capacitif correspondant, caractérisé en ce que lesdits éléments capacitifs sont des diodes à capacité variable (5.7), en ce qu'un circuit (10) de polarisation en continu du point commun (B) de la seconde branche est prévu pour fixer le point d'équilibre du pont de détection, en ce que l'étage différentiel (12) est suivi par des moyens (15,16) de détection synchrone reliés à l'oscillateur et de filtrage passe-bas délivrant un signal de déséquilibre (Ve) du pont de détection, et en ce que le signal de déséquilibre (Ve) est injecté par une ligne de contre-réaction (17) au point commun (A) de la première branche pour assurer un rééquilibrage continu du pont de détection et, par suite, une mesure continue de la variation de la capacité du condensateur variable.

2. Dispositif selon la revendication 1, caractérisé en ce que chaque entrée de l'étage différentiel (**12**) est reliée au point commun d'une branche par l'intermédiaire d'un condensateur de liaison (**13, 14**).

3. Dispositif selon la revendication 1, caractérisé en ce que les points communs des branches sont reliés respectivement, au circuit de polarisation (**10**) et à la ligne de contre-réaction (**17**), par l'intermédiaire de résistances (**9, 18**) de polarisation des diodes à capacité variable.

4. Dispositif selon la revendication 1, caractérisé en ce que le filtre passe-bas est relié à un circuit (**21**) de linéarisation du signal de déséquilibre du pont de détection, circuit comportant :
   - $\underline{n}$ unités différentielles ($U_1$... $U_n$) à seuil recevant chacune, en entrée, le signal de déséquilibre et une tension de référence (**Vr**) et délivrant chacune en sortie un courant ($I_1$... $I_n$) dont la loi de variation comprend une partie (**N**) à pente nulle, raccordée à une partie (**P**) à pente déterminée, par l'intermédiaire d'un point anguleux défini par la tension de référence,
   - et $\underline{n}$ moyens (**38**) de combinaison des courants issus des unités différentielles, de manière à obtenir un signal résultant (**I**) à points anguleux multiples, qui, combiné au signal de déséquilibre, permet la linéarisation de ce dernier.

5. Dispositif selon la revendication 4, caractérisé en ce qu'au moins une unité différentielle délivre un courant de sortie ($I_1$, $I_2$ ...) dont la loi de variation comprend une partie à pente nulle (**N**) pour une valeur du signal de déséquilibre (**Ve**) inférieure à celle de la tension de référence (**Vr**) et une partie à pente déterminée (**P**) pour une valeur du signal de déséquilibre (**Ve**) supérieure à celle de la tension de référence.

6. Dispositif selon la revendication 4 ou 5, caractérisé en ce qu'au moins une unité différentielle délivre un courant de sortie ($I_1$, $I_2$ ...) dont la loi de variation comprend une partie à pente nulle (**N**) pour une valeur du signal de déséquilibre (**Ve**) supérieure à celle de la tension de référence et une partie à pente déterminée (**P**) pour une valeur du signal de déséquilibre (**Ve**) inférieure à celle de la tension de référence (**Vr**).

7. Dispositif selon la revendication 5, caractérisé en ce que chaque unité différentielle est constituée par un premier transistor (**$T_1$**) comportant une base reliée à la tension de référence et un émetteur relié, par l'intermédiaire d'une résistance (**$25_1$, $25_2$ ...**), à l'émetteur d'un second transistor (**$T_2$**) dont la base reçoit le signal de déséquilibre (**Ve**), tandis que le collecteur délivre le courant de sortie ($I_1$, $I_2$ ...).

8. Dispositif selon la revendication 6, caractérisé en ce que chaque unité différentielle est constituée par un premier transistor (**$T_3$**) comportant une base recevant le signal de déséquilibre et un émetteur relié, par l'intermédiaire d'une résistance (33₃, 33₄ ...), à l'émetteur d'un second transistor (T₄) dont la base est reliée à la tension de référence, tandis que le collecteur délivre le courant de sortie (I₃, I₄ ...).

9. Dispositif selon la revendication 7 ou 8, caractérisé en ce que les résistances d'émetteur ($25_1$, $25_2$ ..., $33_3$, $33_4$ ..., 41, 42) déterminent la pente (P) de la loi de variation du courant de sortie des unités analogiques.

10. Dispositif selon la revendication 4, caractérisé en ce que chaque moyen de combinaison (38) est formé par un miroir de courant.

11. Dispositif selon la revendication 10, caractérisé en ce que les miroirs de courant (38) assurent une soustraction des courants de sortie délivrés par les unités analogiques.

12. Dispositif selon la revendication 10, caractérisé en ce que les miroirs de courant (38) assurent une addition des courants de sortie délivrés par les unités analogiques.

13. Dispositif selon la revendication 1, caractérisé en ce que le condensateur (6) de la seconde branche est de nature variable pour assurer une détection différentielle de capacités.


**Patentansprüche**

1. Vorrichtung zum Messen der Änderung der Kapazität eines im wesentlichen veränderlichen Kondensators, insbesondere eines Sensors, umfassend:
   einen Oszillator (2) zum Erzeugen eines Wechselsignals, eine Meßbrücke (3), umfassend einen ersten (3a) und einen zweiten (3b) Zweig, die mit dem Oszillator verbunden sind, wobei der erste Zweig einen veränderlichen Kondensator (1) umfaßt, der in Reihe mit einem anderen kapazitiven Element (5) geschaltet ist, während der zweite Zweig einen Kondensator (6) umfaßt, der in Reihe mit einem anderen kapazitiven Element (7) geschaltet ist, und eine Differentialstufe (12), deren jeder Eingang mit einem gemeinsamen- Punkt eines Zweiges verbunden ist, der zwischen einem Kondensator und dem entsprechenden kapazitiven Element gelegen ist,
   **dadurch gekennzeichnet,**
   daß die kapazitiven Elemente die Dioden mit einer veränderlichen Kapazität (5,7) sind,
   daß ein Schaltkreis (10) zum Anlagen einer kontinuierlichen Vorspannung an den gemeinsamen Punkt (B) des zweiten Zweiges vorgesehen ist, um den Gleichgewichtspunkt der Meßbrücke festzulegen,
   daß der Differentialstufe (12) Einrichtungen (15,16) zum synchronen Wahrnehmen, die mit dem Oszillator verbunden sind, und Tiefpaßfilter zum Abgeben eines Signals der Gleichgewichtsabweichung (Ve) der Meßbrücke folgen, und daß das Signal der Gleichgewichtsabweichung (Ve) an den gemeinsamen Punkt (A) des ersten Zweiges über eine Rückkoppelungsleitung (17) geleitet wird, um eine kontinuierliche Nachjustierung der Wahrnehmungsbrücke und folglich eine kontinuierliche Messung der Veränderung der Kapazität des veränderlichen Kondensators sicherzustellen.

2. Vorrichtung nach Anspruch 1,
   **dadurch gekennzeichnet,**
   daß jeder Eingang der Differentialstufe (12) mit dem gemeinsamen Punkt eines Zweiges mittels eines Verbindungskondensator (13,14) verbunden ist.

3. Vorrichtung nach Anspruch 1,
   **dadurch gekennzeichnet,**
   daß die gemeinsamen Punkte der Zweige jeweils mit dem Schaltkreis (10) zum Anlegen einer Vorspannung und mit der Rückkopplungsleitung (17) mittels der Widerstände (9,18) zum Anlegen einer Vorspannung an die Dioden mit variabler Kapazität verbunden sind.

4. Vorrichtung nach Anspruch 1,
   **dadurch gekennzeichnet,**
   daß der Tiefpaßfilter mit einem Schaltkreis (21) zum Linearisieren des Nachgleichsignals der Meßbrücke verbunden ist, wobei der Schaltkreis umfaßt:
   - n Differentialschwelleinheiten ($U_1...U_n$), die jeweils am Eingang das Signal zum Nachgleichen und eine Referenzspannung (Vr) aufnehmen und jeweils am Ausgang einen Strom ($I_1...I_n$) abgeben, dessen Verlauf einen Abschnitt (N) mit Steigung Null umfaßt, der mit einem Abschnitt (P) mit vorbestimmter Steigung über einen Eckpunkt verbunden ist, der durch die Referenzspannung begrenzt ist,
   - und n-Einrichtungen (38) zum Kombinieren der Ströme, die durch die Differentialeinheit abgegeben werden, in der Art, daß ein resultierendes Signal (I) mit vielen Eckpunkten erhalten wird, das, mit dem nachzugleichenden Signal kombiniert, die Linearisierung des letzteren erlaubt.

5. Vorrichtung nach Anspruch 4,
   **dadurch gekennzeichnet,**

daß wenigstens eine Differentialeinheit einen Ausgangsstrom ($I_1$, $I_2$ ...) abgibt, dessen Verlauf einen Abschnitt mit Steigung Null (N) für einen Wert des Signals zum Nachgleichen (Ve) unterhalb der Referenzspannung (Vr) und einen Abschnitt mit vorbestimmter Steigung (P) umfaßt, für einen Wert des Signals zum Nachgleichen (Ve) oberhalb der Referenzspannung.

6.  Vorrichtung nach Anspruch 4 oder 5,
    **dadurch gekennzeichnet,**
    daß wenigstens eine Differentialeinheit einen Ausgangsstrom ($I_1$, $I_2$ ...) abgibt, dessen Verlauf einen Abschnitt mit Steigung Null (N) für einen Wert des Signals zum Nachgleichen (Ve) oberhalb der Referenzspannung und einen Abschnitt mit vorbestimmter Steigung (P) umfaßt, für einen Wert des Signals zum Nachgleichen (Ve) unterhalb der Referenzspannung (Vr).

7.  Vorrichtung nach Anspruch 5,
    **dadurch gekennzeichnet,**
    daß jede Differentialeinheit aus einem ersten Transistor ($T_1$) ausgebildet ist, umfassend eine Basis, die mit einer Referenzspannung verbunden ist, und einen Emitter, der über einen Widerstand ($25_1$, $25_2$ ...) mit dem Emitter des zweiten Transistors ($T_2$) verbunden ist, dessen Basis das Signal zum Nachgleichen (Ve) aufnimmt, während der Kollektor den Ausgangsstrom ($I_1$, $I_2$ ...) abgibt.

8.  Vorrichtung nach Anspruch 6,
    **dadurch gekennzeichnet,**
    daß jede Differentialeinheit durch einen ersten Transistor ($T_3$) ausgebildet ist, umfassend eine Basis zum Aufnehmen des Signals zum Nachgleichen, und einen Emitter, der über einen Widerstand ($33_3$, $33_4$ ...) mit dem Emitter eines zweiten Transistors ($T_4$) verbunden ist, an dessen Basis die Referenzspannung anliegt, während der Kollektor den Ausgangsstrom ($I_3$, $I_4$ ...) abgibt.

9.  Vorrichtung nach Anspruch 7 oder 8,
    **dadurch gekennzeichnet,**
    daß die Widerstände des Emitters ($25_1$, $25_2$ ..., $33_3$, $33_4$ ..., 41, 42) die Steigung (P) des Verlaufs der Änderung des Ausgangsstroms der Analogeinheiten bestimmen.

10. Vorrichtung nach Anspruch 4,
    **dadurch gekennzeichnet,**
    daß jede Einrichtung (38) zum Kombinieren durch einen Stromspiegel ausgebildet ist.

11. Vorrichtung nach Anspruch 10,
    **dadurch gekennzeichnet,**
    daß die Stromspiegel (38) eine Subtraktion des Ausgangsstroms sicherstellen, der durch die Analogeinheiten abgegeben wird.

12. Vorrichtung nach Anspruch 10,
    **dadurch gekennzeichnet,**
    daß die Stromspiegel (38) eine Addition der Ausgangsströme sicherstellen, die durch die Analogeinheiten abgegeben werden.

13. Vorrichtung nach Anspruch 1, dadurch gekennzeichnet, daß der Kondensator (6) des zweiten Zweiges von einer veränderlichen Art und Weise ist, um eine Differentialmessung der Kapazitäten sicherzustellen.

## Claims

1.  A circuit for measuring variations in the capacitance of a variable capacitor constituting, in particular, a sensor, comprising an oscillator (2) generating an alternating signal, a detection bridge (3) comprising first and second branches (3a, 3b) connected to the oscillator, the first branch including a variable capacitor (1) connected in series with another capacitive element (5), while the second branch comprises a capacitor (6) connected in series with another capacitive element (7), and a differential stage (12), each input of which is connected to the common point of a respective branch located between a capacitor and said corresponding capacitive element, characterized in that said capacitive elements are variable capacitance diodes (5,7), in that a DC bias circuit (10) is provided for biasing the common point (B) of the second branch so as to fix the equilibrium point of the detection bridge, in that the differential stage (12) is followed by synchronous detection and low-pass filtering means (15,16) connected to the oscillator and delivering a signal (Ve) representing the unbalance of the detection bridge, and in that the unbalance signal (Ve) is injected by a feedback line (17) to the common point (A) of the first branch to continuously rebalance the detection bridge and consequently to continuously measure the variation in the capacitance of the variable capacitor.

2.  A circuit according to claim 1, characterized in that each input of the differential stage (12) is connected to the common point of a branch by means of a coupling capacitor (13,14).

3.  A circuit according to claim 1, characterized in that the common points of the branches are connected respectively to the bias circuit (10) and to the feedback line (17) by means of bias resistors (9,18) for the variable capacitance diodes.

4. A circuit according to claim 1, characterized in that the lowpass filter is connected to a linearization circuit (21) for the unbalance signal of the detection bridge, the linearization circuit comprising:

$\underline{n}$ threshold differential units (U1,..., $U_n$) each receiving as inputs the unbalance signal and a respective reference voltage (Vr), and each delivering an output signal in the form of a current ($I_1,...,I_n$) which varies in a manner that includes a portion (N) of zero slope connected to a portion (P) of determined slope by means of an angle point defined by the reference voltage; and

$\underline{n}$ means (38) for combining the currents from the differential units, thereby obtaining a resultant signal (I) having multiple angle points which, when combined with the unbalance signal, enables it to be linearized.

5. A circuit according to claim 4, characterized in that at least one differential unit delivers an output current ($I_1$, $I_2$,...) whose variation includes a zero slope portion (N) for any value of the unbalance signal (Ve) below the reference voltage (Vr), and a determined slope portion (P) for any value of the unbalance signal (Ve) greater than the reference voltage.

6. A circuit according to claim 4 or 5, characterized in that at least one of the differential units delivers an output current ($I_1$, $I_2$,...) which varies in a manner that includes a zero slope portion (N) for any value of the unbalance signal (Ve) greater than the reference voltage, and a determined slope portion (P) for any value of the unbalance signal (Ve) less than the reference voltage (Vr).

7. A circuit according to claim 5, characterized in that each differential unit is constituted by a first transistor ($T_1$) having a base connected to the reference voltage and an emitter connected via a resistor ($25_1$, $25_2$,...) to the emitter of a second transistor ($T_2$) whose base receives the unbalance signal (Ve), while its collector delivers the output current ($I_1$, $I_2$,...)

8. A circuit according to claim 6, characterized in that each differential unit is constituted by a first transistor ($T_3$) having a base receiving the unbalance signal and an emitter which is connected via a resistor ($33_3$, $33_4$,...) to the emitter of a second transistor ($T_4$) whose base is connected to the reference voltage, whereas its collector delivers the output current ($I_3$, $I_4$,...).

9. A circuit according to claim 7 or 8, characterized in that the emitter resistors ($25_1$, $25_2$,..., $33_3$, $33_4$,..., 41, 42) determine the slope (P) of the variation in the output current of the analog units.

10. A circuit according to claim 4, characterized in that each combination means (38) is formed by a current mirror.

11. A circuit according to claim 10, characterized in that the current mirrors (38) subtract the output currents delivered by the analog units.

12. A circuit according to claim 10, characterized in that the current mirrors (38) add the output currents delivered by the analog units.

13. A circuit according to claim 1, characterized in that the capacitor (6) of the second branch is variable in order to provide differential capacitance detection.

# FIG.1

## FIG.2

## FIG.5

FIG.3

EP 0 510 061 B1

# FIG.4 A

$I_1$

P

N

$V_e$

$V_{r_1}$

# FIG.4 B

$I_2$

P

N

$V_e$

$V_{r_2}$

# FIG.4 D

$I_4$

M

P

N

$V_e$

$V_{r_4}$

# FIG.4 C

$I_3$

M

P

N

$V_e$

$V_{r_3}$

# FIG.4 E

$I$

V

$V_{r_4}$  $V_{r_3}$  $V_{r_2}$  $V_{r_1}$